# EUROPEAN PATENT APPLICATION

(11) **EP 4 749 545 A1**
(43) Date of publication of application: **27.05.2026**
(21) Application number: 25217820.7
(22) Date of filing: 21.11.2025
(51) Int. Cl.: G06Q 10/087, G06V 20/52

(54) **METHOD AND SYSTEM FOR MONITORING INVENTORY IN STORAGE FACILITY**

(30) Priority: 21.11.2024 US 202418954660
(71) Applicant: Darvis Inc., Cambridge, MA 02138-1102 (US)
(72) Inventor: Earp, Brian, Merrimack, 3054 (US); Mohr, Jan-Philipp, 20249 Hamburg (DE); Herbe, Panagiotis, 22305 Hamburg (DE)
(74) Representative: Basck Limited

(57) **Abstract**

A method for monitoring inventory items in a storage facility, the method comprising receiving image data from at least one camera device installed in the storage facility, detecting and demarcating a plurality of shelf boundaries of a plurality of shelves based on the image data, determining shelf fill levels in a real-time or near real-time within each demarcated shelf boundary of the plurality of shelf boundaries on the image data, and controlling display of the image data along with the determined shelf fill levels specific for each shelf in the image data. Moreover, the display is updated periodically or continuously to indicate a physical change of inventory items in each shelf based on the determined shelf fill levels in the real-time or near real-time.

## Description

### FIELD OF TECHNOLOGY

Certain embodiments of the disclosure relate to inventory management systems. More specifically, certain embodiments of the disclosure relate to a method and a system for monitoring inventory items in a storage facility.

### BACKGROUND

Advancements in inventory management automation technologies have pushed the development of inventory management systems for automated inventory tracking, monitoring, and handling. However, many inventory management systems still rely on manual processes, which are time-consuming, labor-intensive, and prone to errors. As inventory storage facilities grow in size, the volume of inventory items increases, along with the complexity of managing inventory storage facility operations, which includes tracking inventory levels and locating goods.

In certain scenarios, inventory management systems have been used for inventory tracking that are heavily reliant on fixed-position cameras or proximity-based scanners. Unfortunately, in many real-world applications, accurate detection and tracking of inventory items is complex and challenging. Traditional fixed cameras struggle with varying shelf layouts, lighting conditions, and item orientations, while proximity-based scanners require close physical access to each item, making continuous monitoring impractical. However, conventional inventory management systems heavily rely on manual intervention for monitoring inventory items which, presents significant operational challenges especially in healthcare and logistics where rapid, accurate identification and inventory tracking is required.

In an example, the conventional inventory monitoring systems using standard cameras are not adequate in practice and result in erroneous detection of items in real-time applications thereby, hindering the accuracy and efficacy of the conventional inventory monitoring systems. Some existing solutions, like using multiple fixed cameras or manual scanning systems, might introduce unnecessary complexity not typically manageable in real storage facilities and can create a monitoring gap especially in dynamic environment having diverse lighting conditions.

Further limitations and disadvantages of conventional and traditional approaches will become apparent to one of skill in the art through comparison of such systems with some aspects of the present disclosure as set forth in the remainder of the present application with reference to the drawings.

### BRIEF SUMMARY OF THE DISCLOSURE

A method and a system for monitoring inventory items in a storage facility, substantially as shown in and/or described in connection with at least one of the figures, as set forth more completely in the claims.

These and other advantages, aspects, and novel features of the present disclosure, as well as details of an illustrated embodiment thereof, will be more fully understood from the following description and drawings.

### BRIEF DESCRIPTION OF DRAWINGS

Embodiments of the present disclosure will now be described, by way of example only, with reference to the following diagrams wherein:
FIG. 1A is a diagram illustrating a system for monitoring inventory items in a storage facility, in accordance with an embodiment of the present disclosure;
FIG. 1B is another diagram illustrating the system for monitoring inventory items in a storage facility, in accordance with another embodiment of the present disclosure;
FIG. 1C is another diagram illustrating the system for monitoring inventory items in a storage facility, in accordance with another embodiment of the present disclosure;
FIG. 2 is a diagram illustrating a method for monitoring inventory items in a storage facility, in accordance with an embodiment of the present disclosure;
FIG. 3 is a diagram illustrating the detection and demarcation of a plurality of shelf boundaries of a plurality of shelves, in accordance with an embodiment of the present disclosure;
FIG. 4 is a diagram illustrating an implementation scenario of monitoring inventory items in a storage facility, in accordance with an embodiment of the present disclosure;
FIG. 5A and 5B are diagrams depicting a detection and demarcation of a plurality of shelf boundaries of a plurality of shelves for monitoring inventory items in a storage facility, in accordance with an embodiment of the present disclosure;
FIG. 6 is a diagram that depicts an exemplary shelf layout illustrating the organization and monitoring of inventory items in a storage facility, in accordance with an embodiment of the present disclosure; and
FIG. 7 is a diagram that depicts an exemplary display device illustrating real-time or near real-time monitoring of inventory items in a storage facility, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF THE DISCLOSURE

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible. In the following description, reference is made to the accompanying drawings, which form a part hereof, and which are shown, by way of illustration, various embodiments of the present disclosure.

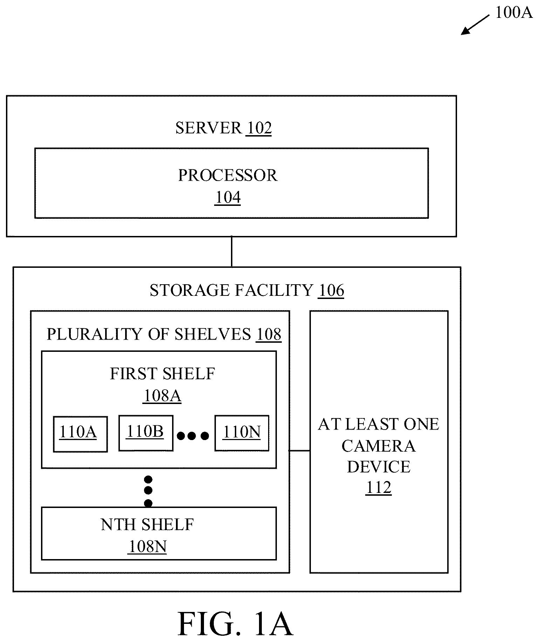

FIG. 1A is a diagram illustrating a system for monitoring inventory items in a storage facility, in accordance with an embodiment of the present disclosure. With reference to FIG. 1A, there is shown a diagram of a system **100A** that includes a processor **104** for monitoring inventory items in a storage facility **106.** Further, the storage facility **106** includes a plurality of shelves **108,** such as a first shelf **108A** up to nth shelf **108N** that are used to storage inventory items and at least one camera device **112.**

The storage facility **106** refers to a physical environment that is used for storing and organizing the inventory items. The storage facility may include, but is not limited to, warehouses, distribution centers, retail backrooms, healthcare supply rooms, manufacturing facilities, and the like. Moreover, the storage facility **106** comprises a plurality of shelves **108** (e.g., from the first shelf **108A** to the Nth shelf **108N**) arranged in a systematic manner to maximize storage efficiency and accessibility.

The server **102** includes suitable logic, circuitry, interfaces, and code that may be configured to receive the image data from the at least one camera device **112** and further detect and demarcate the plurality of shelf boundaries of the plurality of shelves **108.** Examples of the server **102** may include, but are not limited to a cloud server, an application server, a data server, or an electronic data processing device.

The processor **104** is configured to detect and demarcate the plurality of shelf boundaries of the plurality of shelves **108.** Examples of the processor **104** may include, but are not limited to a system-on-module (SoM) processor, an integrated circuit, a co-processor, a microprocessor, a microcontroller, a complex instruction set computing (CISC) processor, an application-specific integrated circuit (ASIC) processor, a reduced instruction set (RISC) processor, a very long instruction word (VLIW) processor, a central processing unit (CPU), a state machine, a data processing unit, and other processors or circuits. Moreover, the processor **104** may refer to one or more individual processors, processing devices, or a processing unit that is part of the system **100A.**

The at least one camera device **112** refers to an image capturing device that is configured to capture a field-of-view (FOV) of the storage facility **106.** In accordance with an embodiment, the at least one camera device **112** includes one or more pan-tilt-zoom (PTZ) camera devices either alone or along with one or more static camera devices installed in the storage facility **106.** In an implementation, the at least one camera device **112** may be oriented at a specific angle (e.g., 45° degrees or 60° degrees) in order to capture a few meters of the storage facility **106.**

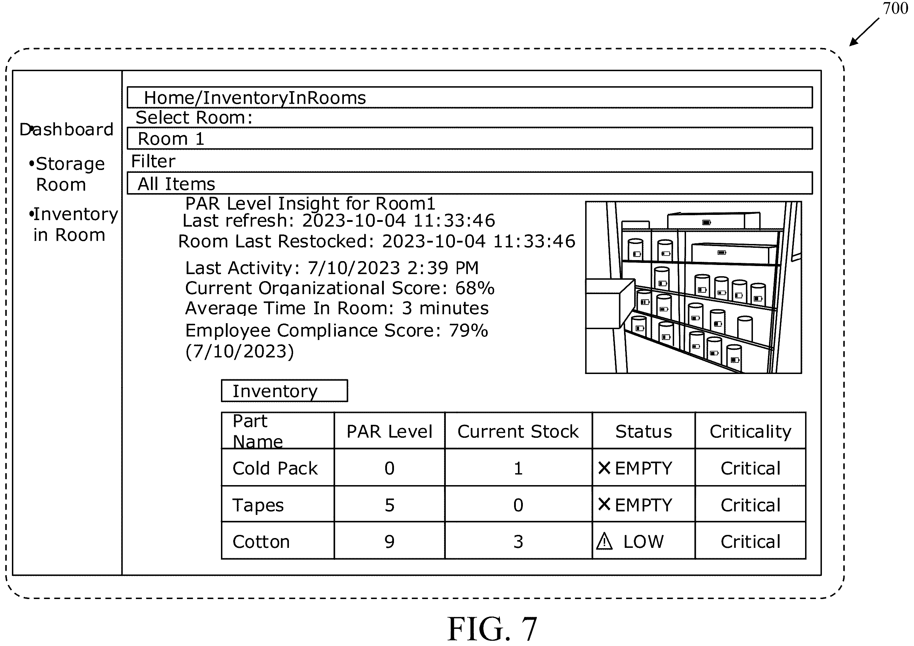

In an exemplary implementation, the system **100A** includes a processor **104** configured to monitor the inventory items in the storage facility **106.** The system **100A** includes the processor **104** that is configured to receive image data from the at least one camera device **112** installed in the storage facility **106.** After that, the processor **104** is configured to detect and demarcate a plurality of shelf boundaries of the plurality of shelves **108** based on the received image data in order to determine the shelf fill levels in a real-time or near real-time within each demarcated shelf boundary of the plurality of shelf boundaries on the image data. Furthermore, the processor **104** is configured to control display of the image data along with the determined shelf fill levels specific for each shelf in the image data. An example of controlling the display of the image data along with the demarcated shelf fill levels is described in detail in FIG. 7. Moreover, the display is updated periodically or continuously to indicate a physical change of inventory items in each shelf based on the determined shelf fill levels in the real-time or near real-time. As a result, the system **100A** is configured to provide real-time inventory monitoring through automated shelf boundary detection and fill level analysis, eliminating the need for manual intervention and reducing operational errors. Additionally, the continuous monitoring and dynamic display updates enable immediate detection of physical changes in inventory levels, facilitating proactive inventory management.

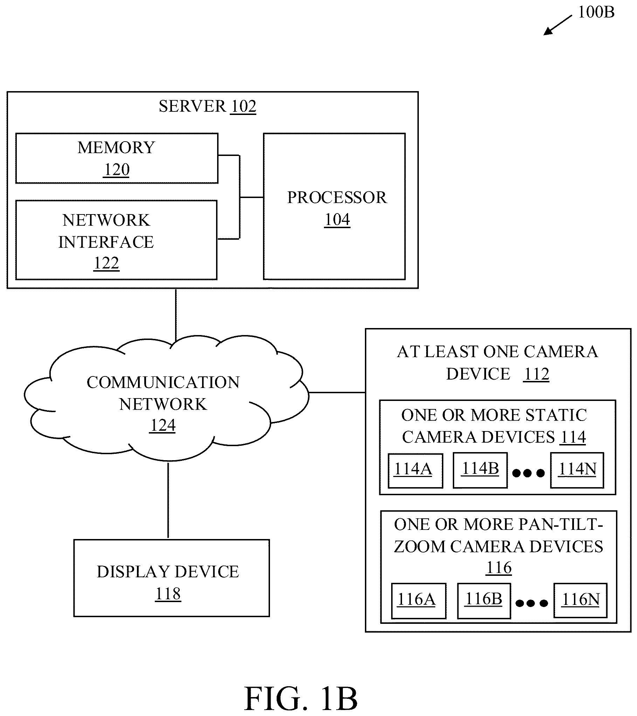

FIG. 1B is another diagram illustrating the system for monitoring inventory items in a storage facility, in accordance with another embodiment of the present disclosure. With reference to FIG. 1B, there is shown another diagram of a system **100B** for monitoring the inventory items. In an implementation, the server **102** of the system **100B** includes a memory **120,** a network interface **122,** and the processor **104.** Furthermore, the at least one camera device **112** includes a one or more static camera devices **114** and a one or more pan-tilt-zoom (PTZ) camera device **116** configured to capture the field-of-view of the storage facility **106.**

The memory **120** is configured to store the image data received by the at least one camera device **112.** Examples of implementation of the memory **120** may include, but are not limited to, Electrically Erasable Programmable Read-Only Memory (EEPROM), Dynamic Random Access Memory (DRAM), Random Access Memory (RAM), Read-Only Memory (ROM), Hard Disk Drive (HDD), Flash memory, a Secure Digital (SD) card, Solid-State Drive (SSD), and/or CPU cache memory.

The network interface **122** may include suitable logic, circuitry, interfaces, and/or code that is configured to connect the server **102** to the at least one camera device **112.** Examples of the network interface **122** may include, but are not limited to, a cellular network (e.g., a 5G, or 5G NR network, such as sub 6 GHz, cmWave, or mmWave communication network), a wireless sensor network (WSN), a cloud network, a Local Area Network (LAN), a vehicle-to-network (V2N) network, a Metropolitan Area Network (MAN), and/or Internet.

In operation, the processor **104** of the system **100B** is communicatively coupled with at least one camera device **112** and the processor **104** is configured to receive image data from the at least one camera device **112.** In an example, the processor **104** is configured to receive the image data from a first camera device. In another example, the processor **104** is configured to receive the image data from a first camera device and a second camera device. In other words, the at least one camera device is configured to capture the field-of-view (FOV) of the storage facility **106** and further send the received image data to the processor **104** for further processing.

In accordance with an embodiment, the at least one camera device **112** includes one or more pan-tilt-zoom (PTZ) camera devices **116** either alone or along with one or more static camera devices **114** installed in the storage facility **106.** In an implementation, the one or more static camera devices **114,** for example, a first static camera device **114A,** a second static camera device **114B,** up to Nth static camera device **114N** is configured to capture the FOV of the storage facility **106** in wide angle. Further, the captured image (or FOV) is sent to the one or more PTZ camera devices **116,** such as a first PTZ camera device **116A,** a second PTZ camera device **116B,** up to Nth PTZ camera device **116N** in order to provide the image data with high resolution. In another implementation, the one or more PTZ camera devices **116** is configured to capture the high resolution image directly from the storage facility **106.** Moreover, the at least one camera device **112** is installed in the storage facility **106** based on multiple parameters, such as shelf layout dimensions, ambient lighting conditions, power source availability, network connectivity requirements, and the like. Additionally, the one or more static camera devices **114** and the one or more PTZ camera devices **116** are installed in the storage facility **106** to minimize blind spots thereby ensure optimal viewing angles and maintain sufficient overlap between coverage areas in order to provide clear label visibility with adequate resolution for detection. In an example, the one or more static camera devices **114** may be ceiling-mounted at strategic intervals with antivibration mounts and environmental housings and the one or more PTZ camera devices **116** can be centrally positioned on support columns with **360**-degree rotation capability for maximum shelf coverage. In another example, the one or more static camera devices **114** may be mounted on shelf endpoints or at regular height intervals with adjustable brackets, arranged to create overlapping coverage patterns. In yet another example, the one or more PTZ camera devices **116** may be mounted at an optimal height to maintain direct line of sight to all shelves, while the one or more static camera devices **114** are positioned perpendicular to shelf faces for consistent image capture. As a result, a high resolution image can be captured that can be further utilized for further detecting and demarcating the plurality of shelf boundaries.

In accordance with an embodiment, the one or more PTZ camera devices **116** is configured to determine pixel coordinates by identifying the label areas of the one or more detected labels and further transforms pixel coordinates into PTZ camera control parameters for controlling the movement of the at least one PTZ camera device to zoom into the identified label areas. The one or more PTZ camera devices **116** are installed in the storage facility **106** to perform precision label detection and analysis in order to overcome the limitations of fixed-position camera devices and eliminate the need for manual label inspection. In an example, the plurality of labels may include but is not limited to a barcode, an RFID Tag, a QR code, and the like, without affecting the scope of the present disclosure. Moreover, one or more PTZ camera devices **116** is configured to convert 2D image pixel coordinates (i.e., x, y) into a 3D spherical coordinate system (pan angle 0, tilt angle φ, zoom factor z) using mathematical transformations. Additionally, the PTZ control parameters are calculated, such as through a comprehensive motion control system that manages horizontal rotation angles from 0° to 360° with acceleration and velocity control for pan movements, vertical angle adjustments from -90° to +90° with motion smoothing for tilt operations, and focal length variations from 1x to 30x with auto-focus compensation for zoom functionality. In an implementation, a bounding box is created around each of the label's pixel coordinates that are mapped into the PTZ coordinates of the one or more PTZ camera devices 116 in order to read the label. In another implementation, a coordinate system is also mapped onto a spherical representation of the storage facility 106 to accurately and effectively map out the storage facility 106 having the plurality of shelves 108 that can be in any direction from a centrally placed one or more PTZ camera devices 116. Once mapped, the one or more PTZ camera device 116 is configured to focus on the relevant detection and executes the same zooming and label reading operations. As a result, a sophisticated motion control including acceleration and deceleration ramps can be implemented to prevent motion blur, along with automated stabilization delays between movements to ensure image clarity thereby improving the label detection accuracy while reducing monitoring time and ensuring reliable label detection even in complex storage environments with varying shelf configurations and lighting conditions.

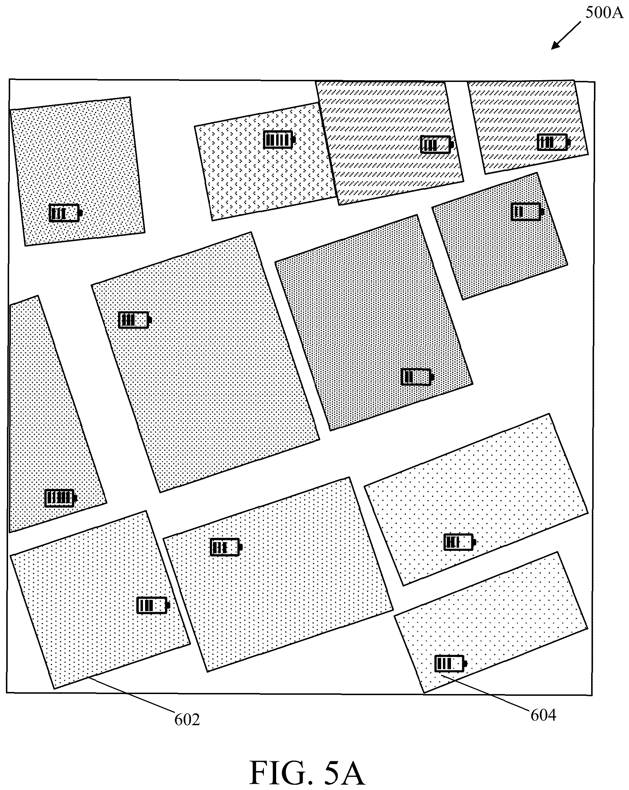

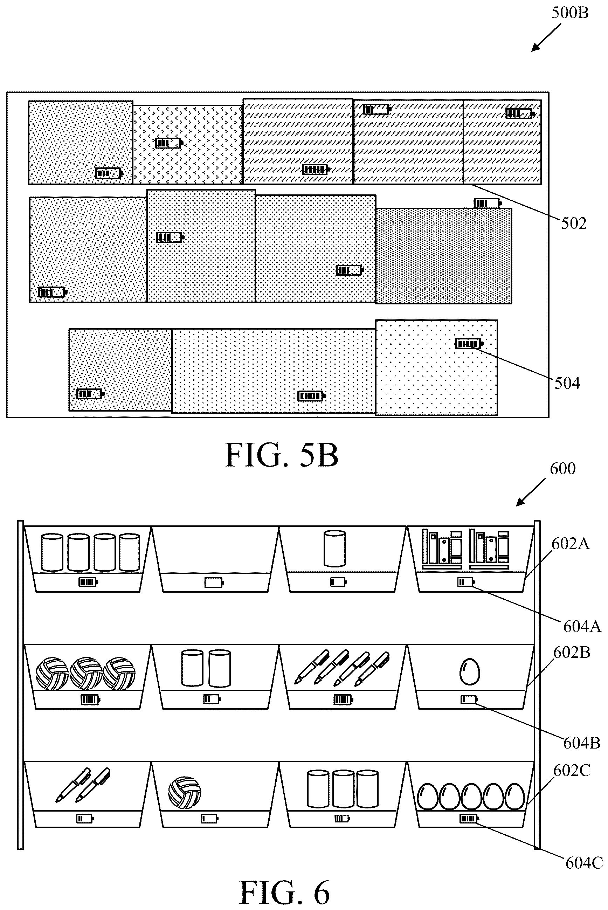

Furthermore, the processor **104** is configured to detect and demarcate a plurality of shelf boundaries of the plurality of shelves **108** based on the image data. Firstly, the processor **104** is configured to receive the image data from the at least one camera device **112** installed in the storage facility **106.** Thereafter, the processor **104** is configured to detect and demarcate the plurality of shelf boundaries from the plurality of shelves **108** based on the image data. An example of the detected and demarcated plurality of shelf boundaries is described in FIG. 5A and 5B. As a result, the processor **104** is configured to enable a real-time inventory monitoring with reduces labor costs and adaptable to various storage environments.

In accordance with an embodiment, the processor **104** is further configured to detect the plurality of labels at the plurality of shelves **108** along with a corresponding orientation of each detected label with respect to a corresponding reference axis for the detection and demarcation of the plurality of shelf boundaries. In an implementation, an object detection model is utilized to detect the plurality of labels at the plurality of shelves **108** along with the corresponding orientation of each of the determined label relative to the corresponding reference axis associated with inventory items or storage locations. In addition, the processor **104** is configured to calculate the angular orientation of each label with respect to a predefined reference axis, such as the x-axis, based on the spatial positioning in the image in order to detect the relative placement of labels within the storage facility **106** and aids in determining the relationships between neighboring labels. Therefore, by detecting the one or more labels along with corresponding orientation of each determined label relative to a corresponding reference axis, the processor **104** is configured to reduce reliance on manual operations while enhancing the accuracy of the system **100B** in label identification.

In accordance with an embodiment, the processor **104** is configured to select a subject label located at the first shelf on the image data for which a shelf boundary is to be demarcated. In an example, the subject label is located at the top of the image data. In another example, the subject label is located at the corner of the image data. In another example, the subject label is located at the bottom of the image data. In yet another example, the subject label is located in the center of the image data. The selection of the subject label is performed in a real-time or a near real-time in order to detect and demarcate the plurality of shelf boundaries of the first shelf. Furthermore, the processor **104** is configured to select a first proximal label on the image data at the first side of the subject label. Moreover, the first proximal label is located at a second shelf near the first shelf. The first proximal label serves as a spatial reference point to define the horizontal boundary of the shelf region, which is selected to ensure that the plurality of shelf boundaries is determined with respect to neighboring shelves thereby enhancing the accuracy of the in shelf segmentation. The processor **104** is further configured to select a second proximal label on the image data at a second side of the subject label. Moreover, the second proximal label is located at a third shelf near the first shelf and the second side is opposite the first side. In other words, after identifying the first proximal label, the processor **104** is further configured to select a second proximal label from the image data, positioned on a second side of the subject label, which is opposite to the first side. Therefore, the selection of the second proximal label is used to provide a symmetrical reference to the subject label, ensuring that the full horizontal extent of the shelf is accounted for during the detection and demarcation of the plurality of shelf boundaries. Further, the processor **104** is configured to select a third proximal label on the image data at a third side of the subject label, wherein the third proximal label is located at a fourth shelf located above the first shelf. The third proximal label provides a vertical reference point to the subject label, enabling the determination of the upper boundary of the shelf. By integrating vertical and horizontal references, the processor **104** is configured to ensure comprehensive and accurate shelf boundary definitions. Moreover, the subject label, the first proximal label, the second proximal label, and the third proximal label are part of the detected plurality of labels. Hence, the selection of the subject label, the first proximal label, the second proximal label, and the third proximal label is used to ensure that all spatial references used for boundary determination are part of the previously identified and analyzed set of labels, thereby maintaining consistency and accuracy in the detection and demarcation of the plurality of shelf boundaries.

In accordance with an embodiment, the processor **104** is configured to perform a carving operation on the received image data in order to slice an image in order to select the subject label, the first proximal label, the second proximal label, and the third proximal label for the detection and demarcation of the plurality of shelf boundaries. The carving operation involves analyzing the image data to identify regions of interest based on label detection. In an implementation, the processor **104** is configured to utilize geometric and positional data to slice the image into sections, each corresponding to a shelf boundary. Moreover, the subject label is selected based on its location, while the proximal labels are identified based on their proximity and orientation relative to the subject label that enables precise demarcation of shelf boundaries, even in challenging scenarios, such as shelves having varying sizes or irregular arrangements.

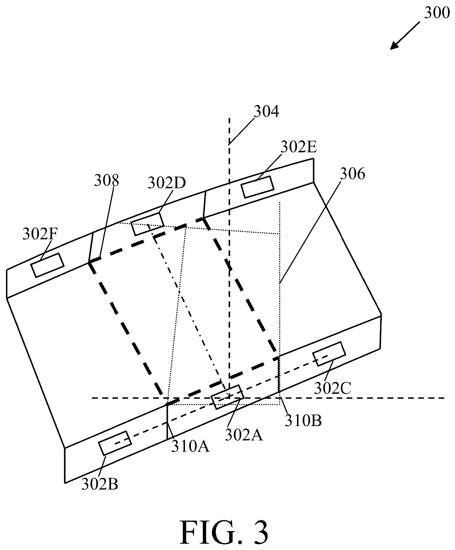

In accordance with an embodiment, the processor **104** is configured to determine a first midpoint between the first proximal label and the subject label and a second midpoint between the second proximal label and the subject label for the detection and demarcation of the plurality of shelf boundaries. An example of the determination of the first midpoint and the second midpoint is given and described in detail in FIG. 3. Moreover, the first midpoint and the second midpoint are determined as reference points to enable the detection and demarcation of the plurality of shelf boundaries accurately.

In accordance with an embodiment, the processor **104** is configured to generate a shelf boundary for the subject label based on the determined first midpoint, the second midpoint, and the third proximal label selected from the plurality of shelf boundaries when the first shelf is surrounded by at least three adjacent shelves in three different directions. In an implementation, the shelf boundary can be a polygon. In another implementation, the shelf boundary can be any spherical figures, for example, circle, oval, and the like. In yet another implementation, the shelf boundary for the subject label can be of any shape that depicts the shape of the plurality of shelves **108** placed in the storage facility **106.** In an example, the first shelf is surrounded by a second shelf, which is located at the eastern side of the subject label, a third label is located at the western side of the subject label, and a third label is located at the northern side of the subject label. In another example, the first shelf is surrounded by a second shelf, which is located at the eastern side of the subject label, a third shelf is located at the western side of the subject label, and a fourth shelf is located at the southern side of the subject label. Moreover, the shelf located at the southern side of the subject label is not selected due to the fact the labels are always beneath the contents they represent. However, the fourth label, which is located at the southern side of the subject label can be selected based on the alignment of the plurality of shelves **108,** without affecting the scope of the present disclosure. An example of the generated shelf boundary is given and described in FIGs. 3 and 5A-5B. Moreover, by integrating the spatial references, the processor **104** is configured to define the shelf boundary accurately thereby ensuring a comprehensive coverage of each of the plurality of shelves **108,** even in complex configurations, thereby improving the accuracy and reliability of inventory management.

In accordance with an embodiment, the processor **104** is configured to generate a shelf boundary for the subject label located at the first shelf based on the determined first midpoint and the second midpoint from the plurality of shelf boundaries when the first shelf is a top shelf surrounded by at least two adjacent shelves without any presence of shelves above the first shelf. In an example, the subject label is located on the top shelf of the image data received by the processor **104.** In such a case, the processor **104** is configured to generate the shelf boundary based on the determined first midpoint and the second midpoint from the plurality of shelf boundaries. Moreover, the first midpoint refers to a point the depicts the half of the distance between the subject label and the first label. Similarly, the second midpoint refers to a point the depicts the half of the distance between the subject label and the second label. However, as the subject label is located at the top of the shelf, the third label cannot be selected due to the absence of any shelf above the first shelf. As a result, the processor **104** is configured to ensure precise boundary generation even in edge cases, for example, for top shelves thereby enhancing inventory management's adaptability and reliability of the system **100B.**

In accordance with an embodiment, the processor **104** is configured to generate a shelf boundary for the subject label based on either the first midpoint or the second midpoint, and the selected third proximal label from the plurality of shelf boundaries when the first shelf is a corner shelf surrounded by one adjacent shelf and a top shelf above the first shelf. In an example, the subject label is located on a corner shelf in the image data received by the processor **104.** In such a case, the processor **104** is configured to generate the shelf boundary based on either the determined first midpoint or the second midpoint and the selected third proximal label from the plurality of shelf boundaries. Moreover, the third proximal label is located directly above the subject label, defines the upper boundary of the corner shelf. However, as the subject label is located at the corner of the storage facility **106,** the corresponding subject label lacks adjacent shelves on one side, resulting in only one lateral label and one top label contributing to the boundary generation. The processor **104** is configured to handle such configurations (e.g., the shelfs located at the corner of the image data) effectively, ensuring precise boundary detection even for corner shelves, thereby enhancing the adaptability and reliability of the system **100B** in managing inventory within irregular shelf layouts.

In accordance with an embodiment, the processor **104** is configured to adjust the shelf boundary of a first shelf corresponding to the subject label from the plurality of shelf boundaries based on the orientation of the subject label with respect to the predefined angle. In an example, the subject label is located on a shelf with an irregular orientation in the image data received by the processor **104.** In such a case, the processor **104** is configured to adjust the shelf boundary corresponding to the subject label from the plurality of shelf boundaries based on the orientation of the subject label relative to a predefined angle. The predefined angle acts as a reference axis to align the shelf boundaries accurately with the actual layout of the shelves in the storage facility. For instance, if the subject label is tilted at an angle relative to the x-axis, the processor **104** recalculates the boundary dimensions and positions to account for this tilt, ensuring the boundary aligns with the shelf's true geometry. In an implementation, a segmentation model is utilized to determine the predefined angle that can be used to adjust the shelf boundary of the first shelf corresponding to the subject label from the plurality of shelf boundaries. As a result, the processor 104 is configured to enhance the accuracy and adaptability of the system **100B** for monitoring the inventory items especially for the shelves that are positioned at varying angles or orientations.

Furthermore, the processor **104** is configured to determine shelf fill levels in a real-time or near real-time within each demarcated shelf boundary of the plurality of shelf boundaries on the image data. In an example, the processor **104** is configured to receive the image data from the at least one camera device **112** that is installed in the storage facility **106** and identifies a plurality of demarcated shelf boundaries. Within each shelf boundary, the processor **104** is configured to determine the shelf fill levels in real-time or near real-time. In an implementation, the processor **104** analyzes the pixel density and spatial distribution of items within a shelf boundary to calculate the percentage of the shelf occupied by inventory items. For example, if a shelf boundary represents a medical supply shelf, the processor **104** is configured to detect the fill level, such as 30% based on the visible quantity of the inventory items as compared to the total shelf capacity in order to detect low-stock situations proactively and ensuring uninterrupted operations. As a result, the processor **104** is configured to reduce manual intervention, and provide accurate timely insights in order to ensure that the situations, such as stock shortages or overstocking situations are identified promptly thereby improving the operational efficiency and reducing downtime caused by inventory lapses.

In accordance with an embodiment, the processor **104** is configured to segment shelf content within each shelf boundary of the plurality of shelf boundaries and determine fill levels by determining empty space and occupied ratio for the determination of the shelf fill levels in the real-time or near real-time within each demarcated shelf boundary of the plurality of shelf boundaries. In an example, the processor **104** is configured to perform segmentation of the shelf content within each demarcated shelf boundary from the plurality of shelf boundaries to determine the shelf fill levels in real-time or near real-time, such as by analyzing the received image data in order to identify distinct objects or areas corresponding to occupied and empty spaces within each shelf boundary. As a result, the processor **104** is configured to provide precise and detailed insights into inventory levels, ensuring an efficient and reliable stock management. For example, in a pharmacy storage facility, the processor **104** is configured to identify that 80% of a particular shelf is occupied by medicine bottles, leaving 20% as empty space. In such a case, the staff of the pharmacy storage facility can restock such inventory items based on the requirements, such as by getting alert from the server **102** or by analyzing the status of the inventory items through the generated report. As a result, by dynamically segmenting shelf contents and calculating fill levels, the processor **104** is configured to reduce the risk of errors with enhanced operational efficiency, and reliability for inventory monitoring.

Furthermore, the processor **104** is configured to control display of the image data along with the determined shelf fill levels specific for each shelf in the image data. Moreover, the display is updated periodically or continuously to indicate a physical change of inventory items in each shelf based on the determined shelf fill levels in the real-time or near real-time. For example, in a retail store, the processor **104** is configured to display an annotated live feed of the shelves, where each shelf boundary is marked with its corresponding fill level, such as "Shelf 1: 75% full, Shelf 2: 40% full. If a product is removed or restocked, then, in that case, the processor **104** is configured to dynamically update the display to indicate the new fill levels, providing a continuously accurate representation of the inventory status. Therefore, by visualizing shelf fill levels directly on the display, the system enhances operational efficiency, reduces the chances of stockouts or overstocking, and improves decision-making in inventory management especially in environments like warehouses, healthcare storage, or supermarkets, where constant monitoring of stock levels is critical to ensure smooth operations.

In accordance with an embodiment, the system **100B** includes a display device **118** configured to display the image data along with the determined shelf fill levels specific for each shelf in the image data. In an implementation, the processor **104** is configured to display the image data alongside the determined shelf fill levels for each specific shelf depicted within the image. The display device **118** dynamically visualizes the fill levels by integrating the information with the corresponding shelf boundaries on the image. For example, in a retail setting, the display device is configured to display an annotated image where each shelf is labeled with real-time data, such as Shelf A: 60% full or Shelf B: Empty. As a result, the processor **104** is configured to ensure that the displayed information is synchronized with ongoing inventory changes, providing updates in near real-time as items are added to or removed from the plurality of shelves **108** in order to improve the operational efficiency, reduce inventory management time, and support timely decision-making, making it beneficial for environments requiring precise and responsive stock monitoring, such as warehouses, supermarkets, medical facilities, and the like.

In accordance with an embodiment, the processor **104** is configured to generate a dynamic report including stock keeping units (SKUs), status, and fill levels of the inventory items that are updated in real-time or near-real time. For example, the processor **104** is configured to generate the dynamic report including the SKUs, status, and the fill levels of the inventory items, such as SKU123: In Stock, 70% Full or SKU456: Out of Stock. The report is dynamically refreshed to reflect physical changes in inventory, such as items being removed, added, or restocked. In an implementation, the report can be accessed through various interfaces, such as a centralized dashboard, a mobile application, or emailed summaries, depending on the operational requirements. In an example, in a retail scenario, the report enables store managers to track stock levels across multiple locations and prioritize replenishment for fast-moving items. Similarly, in a healthcare environment, it can highlight critical supplies nearing depletion, ensuring timely procurement. As a result, the processor **104** is configured to provide actionable insights in real-time, eliminating the need for manual stock-taking and reducing human error. Additionally, by offering precise, up-to-date inventory data, the processor **104** is configured to improve supply chain efficiency, ensure optimal stock levels, and minimize the risk of stockouts or overstocking.

In accordance with an embodiment, the processor **104** is configured to generate one or more alerts for the inventory items having shelf fill levels below one or more predefined thresholds. In an example, if a shelf containing a specific stock-keeping unit (SKU) has a fill level of less than 20%, the processor **104** can trigger an alert, such as a notification on a dashboard, an email to the inventory manager, or an SMS to the procurement team. However, such alerts can be customizable based on the type of inventory and operational requirements. For example, in a pharmacy, an alert may indicate, "Critical Alert: Item **SKU123** (Bandages) below 10% fill level," prompting immediate replenishment actions. As a result, the processor **104** is configured to provide proactive inventory management by eliminating manual monitoring and minimizing the risk of stockouts in order to ensures that essential inventory items are always available, thereby improving operational efficiency, customer satisfaction, and overall supply chain reliability.

Advantageously, the processor **104** is configured to provide an automated inventory monitoring system that combines dynamic shelf boundary detection, real-time fill level monitoring, and intelligent camera control in order to resolve critical inventory management challenges that are faced by the traditional inventory monitoring system. The processor **104** is configured to utilizes spatial relationships between labels for precise shelf boundary demarcation, coupled with adaptive PTZ camera control that transforms pixel coordinates into precise camera movements for detailed label analysis, such as by automatically detecting the plurality of shelf boundaries in various configurations (e.g., corner, top, or surrounded shelves), real-time monitoring of fill levels, and by generating dynamic inventory reports with SKU-level tracking. Additionally, the processor **104** is configured to operate with either with one or more PTZ camera devices **116** alone or in combination with the one or more static camera devices **114** provides deployment flexibility while maintaining accuracy, making the system **100B** reliable and efficient in dynamic storage environments where manual monitoring would be time-consuming and error-prone.

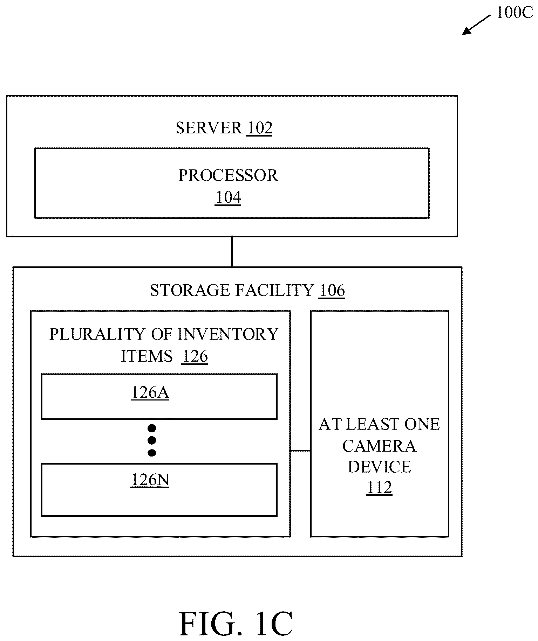

FIG. 1C is a diagram illustrating an alternative configuration of a system 100C for monitoring inventory items in a storage facility, in accordance with another embodiment of the present disclosure. With reference to FIG. 1C, there is shown a system 100C that includes a server 102 with a processor 104, and a storage facility 106. The storage facility 106 includes a plurality of inventory items 126 (such as items 126A through 126N) and at least one camera device 112.

In accordance with an embodiment, the plurality of inventory items 126 are positioned on various surfaces or locations within the storage facility 106, including but not limited to mobile carts, tables, countertops, floor areas, bins, or other non-shelf storage arrangements. For example, in healthcare or medical supply environments, inventory items, such as medical supplies, instruments, or pharmaceuticals may be placed on mobile supply carts that are moved between different locations within the facility. The processor 104 is configured to detect and demarcate boundaries of individual inventory items 126 independent of shelf structures, such as by identifying the boundaries of each discrete inventory item based on visual characteristics, labels, or spatial positioning within the captured image data from the at least one camera device 112. Furthermore, the processor 104 is configured to determine fill levels by tracking the presence or absence of inventory items 126 within the monitored area. When an inventory item is detected as present within the field of view, the inventory level for that item type is maintained or incremented. When an inventory item is detected as being removed from the field of view or moved to a different location, the processor 104 updates the inventory levels accordingly by tracking these detected changes in inventory item positions.

In an implementation, the processor 104 applies computer vision techniques to identify discrete inventory items within the image data captured by the at least one camera device 112. Each inventory item 126 (such as item 126A, 126B, up to 126N) is detected based on its visual appearance, distinctive features, packaging characteristics, or associated labels. The processor 104 determines boundaries around each detected inventory item by analyzing edges, contours, color differences, or spatial discontinuities in the image data, without requiring the items to be positioned on predefined shelf structures. For example, in a medical supply room where items are stored on mobile carts, the processor 104 detects individual medical supply packages positioned on the cart surface. The boundary for each package is determined by identifying the spatial extent of that package in the image, creating a demarcated region around each discrete item. These boundaries are established based on the individual items themselves rather than on any underlying storage structure like shelves.

Furthermore, the processor 104 determines fill levels by tracking the presence or absence of inventory items and updating inventory levels based on detected changes in inventory item positions. In an implementation, the processor 104 maintains a database or registry of inventory items, associating each item type with a count or quantity. When the processor 104 detects an inventory item 126A in the image data, it increments or maintains the count for that item type. When an inventory item is no longer detected in subsequent image frames, including indicating removal from the monitored area, then, in that case, the processor 104 decrements the inventory count accordingly. Furthermore, the tracking of presence or absence is performed continuously or periodically. For instance, the at least one camera device 112 captures image data at regular intervals (e.g., every 1 second, 5 seconds, or 30 seconds). The processor 104 compares consecutive image frames to detect changes. If inventory item 126A was present in frame N but absent in frame N+1, the processor 104 determines that the item has been removed and updates the inventory level by reducing the count for that item type.

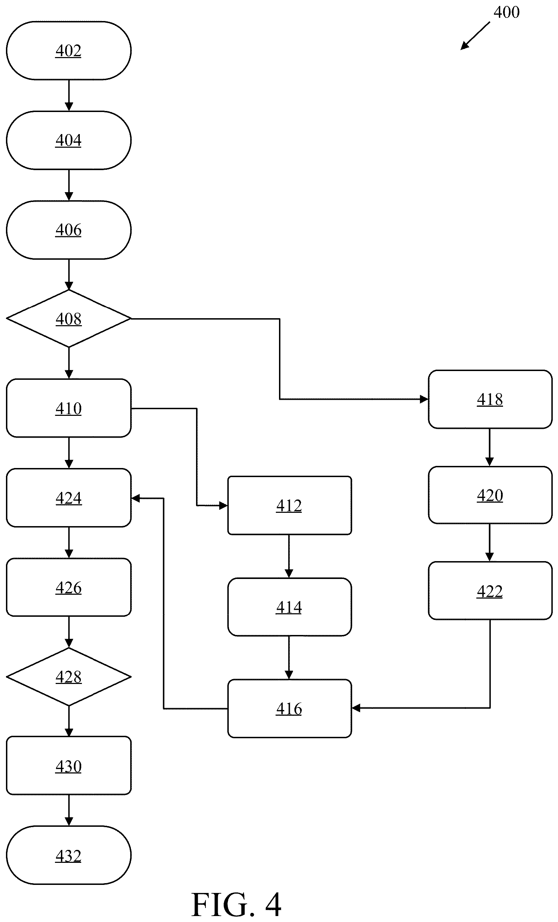

Furthermore, the processor 104 tracks detected changes in inventory item positions to update inventory levels. The object tracking model (operation 406 in FIG. 4) monitors the spatial coordinates of each detected inventory item across sequential image frames. When an inventory item moves from a first location (e.g., on a supply cart in Zone A) to a second location (e.g., removed from the field of view or moved to Zone B), the processor 104 calculates the change in position. Based on this detected change, the processor 104 updates the inventory levels for the respective zones or locations. In an example scenario, a nurse approaches a mobile medical supply cart containing inventory items 126. The at least one camera device 112 captures image data showing the cart with multiple sterile gauze packages positioned on its surface. The processor 104 detects boundaries around each gauze package independent of any shelf structure, which is the boundaries correspond to the individual packages themselves. Initially, the processor 104 determines that 10 gauze packages are present (fill level = 10 units). When the nurse removes 3 packages, the subsequent image frame shows only 7 packages. The processor 104 detects the absence of 3 packages by comparing the current frame to the previous frame and updates the inventory level to 7 units. Moreover, the processor 104 may utilize the one or more PTZ camera devices 116 to capture detailed images of inventory items positioned on non-shelf arrangements. For instance, when an inventory item 126B on a table requires identification, the PTZ camera device 116 automatically adjusts its pan, tilt, and zoom parameters to focus on that specific item, enabling the processor 104 to read labels (barcodes, QR codes, RFID tags) and accurately identify the item type for inventory tracking purposes. As a result, the system 100C enables accurate inventory tracking for mobile carts, temporary staging areas, pharmaceutical dispensing locations, emergency supply stations, or any storage arrangement where inventory items are positioned on various surfaces without relying on traditional shelf-based organization.

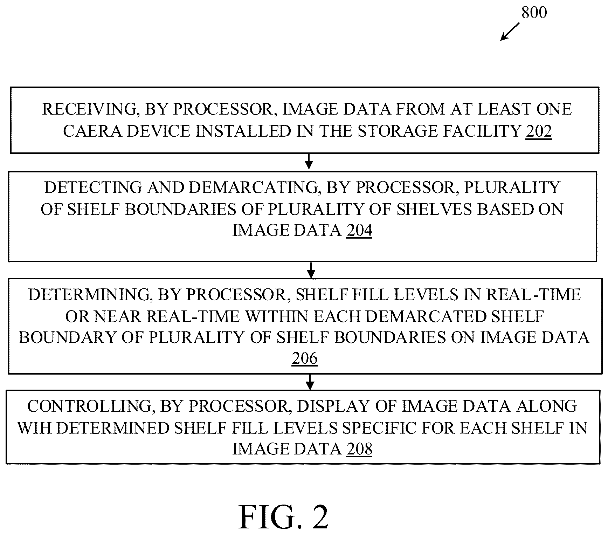

FIG. 2 is a diagram illustrating a method for monitoring inventory items in a storage facility, in accordance with an embodiment of the present disclosure. With reference to FIG. 2, there is shown a flowchart that depicts a method **200** for monitoring the inventory items in the storage facility **106.**

There is shown the method **200** for monitoring inventory items in a storage facility **106.** In an implementation, the processor **104** is configured to perform all the operations of the method **200.** At step **202,** the method **200** includes receiving image data from at least one camera device **112** installed in the storage facility **106** and at step **204,** the method **200** includes detecting and demarcating a plurality of shelf boundaries of the plurality of shelves **108** based on the image data. Furthermore, at step **206,** the method **200** includes determining shelf fill levels in a real-time or near real-time within each demarcated shelf boundary of the plurality of shelf boundaries on the image data and at step **208,** the method **200** includes controlling display of the image data along with the determined shelf fill levels specific for each shelf in the image data. Moreover, the display is updated periodically or continuously to indicate a physical change of inventory items in each shelf based on the determined shelf fill levels in the real-time or near real-time.

The steps **202** to **208** are only illustrative, and other alternatives can also be provided where one or more steps are added, one or more steps are removed, or one or more steps are provided in a different sequence without departing from the scope of the claim herein.

Advantageously, the method **200** is used to provide an automated inventory monitoring system that combines dynamic shelf boundary detection, real-time fill level monitoring, and intelligent camera control in order to resolve critical inventory management challenges that are faced by the traditional inventory monitoring system. The method **200** utilizes spatial relationships between labels for precise shelf boundary demarcation, coupled with adaptive PTZ camera control that transforms pixel coordinates into precise camera movements for detailed label analysis, such as by automatically detecting the plurality of shelf boundaries in various configurations (e.g., corner, top, or surrounded shelves), real-time monitoring of fill levels, and by generating dynamic inventory reports with SKU-level tracking. Additionally, the method **200** is used to enable the at least one camera device **112** to operate with either one or more PTZ camera devices **116** alone or in combination with the one or more static camera devices **114** provides deployment flexibility while maintaining accuracy, making the system **100B** reliable and efficient in dynamic storage environments where manual monitoring would be time-consuming and error prone.

FIG. 3 is a diagram illustrating the detection and demarcation of a plurality of shelf boundaries of a plurality of shelves, in accordance with an embodiment of the present disclosure. With reference to FIG. 3, there is shown a diagram **300** that depicts the detection and demarcation of the plurality of shelves **108.**

In an implementation, the processor **104** is configured to detect the plurality of labels, such as a first label **302A,** a second label **302B,** a third label **302C,** a fourth label **302D,** a fifth label **302E,** and a sixth label **302F** at the plurality of shelves **108** along with a corresponding orientation of each detected label with respect to a corresponding reference axis **304** for the detection and demarcation of the plurality of shelf boundaries. Thereafter, the processor **104** is configured to select a subject label (i.e., the first label **302A)** located at a first shelf on the image data for which the shelf boundary is to be determined. After that, the processor **104** is configured to select a first proximal label (i.e., a west label), which is the third label **302C,** a second proximal label (i.e., an east label), which is the second label **302B,** and a third proximal label (i.e., a north label), which is the fourth label **302D.** Moreover, the first proximal label, the second proximal label, and the third proximal label is selected by comparing the angles and distance of each label to the subject label (i.e., the first label **302A).** In an implementation, the selection of the subject label is performed for each of the plurality of labels that are detected in the image data, such as by measuring the angles within certain thresholds for each of the plurality of shelves **108.** A first midpoint **310A** is determined between the first proximal label (i.e., the second label **302B)** and the subject label (i.e., the first label **302A)** and a second midpoint **310B** between the second proximal label (i.e., the third label **302C)** and the subject label for the detection and demarcation of the plurality of shelf boundaries. In an implementation, a shelf boundary is generated for the subject label based on the determined first midpoint **310A,** the second midpoint **310B,** and the third proximal label (i.e., the fourth label **302D)** selected from the plurality of shelf boundaries when the first shelf is surrounded by at least three adjacent shelves in three different directions. In an implementation, the shelf boundary is generated for the subject label located at the first shelf based on the determined first midpoint **310A** and the second midpoint **310B** from the plurality of shelf boundaries when the first shelf is a top shelf surrounded by at least two adjacent shelves without any presence of shelves above the first shelf along with a default (or defined) height for the shelf. In another implementation, the shelf boundary is generated for the subject label based on either the first midpoint or the second midpoint, and the selected third proximal label from the plurality of shelf boundaries when the first shelf is a corner shelf surrounded by one adjacent shelf and a top shelf above the first shelf. Moreover, the shelf boundary is generated (i.e., represented as a first rectangle **306).** In another implementation, the generated shelf boundary can be a circle, an oval, a rectangle, a square, or any other polygon without affecting the scope of the present disclosure. After that, the processor **104** is configured to adjust the generated shelf boundary of the first shelf corresponding to the subject label from the plurality of shelf boundaries based on the orientation of the subject label with respect to the predefined angle, such as by rotating the generated first rectangle by rotating the angle by the average angle determined by a segmentation model (as represented by a second rectangle **308).** In addition, corners of the storage facility **106** is identified by a shift in the angle of the labels on one wall of the room as opposed to the other side of the room enabling the detection of a general angle shift when selecting the first proximal label and the second proximal label. Thereafter, a KNN model is used to classify the carved image polygon with the nearest neighbor describing the corresponding shelf fill level. In addition, tracking algorithms are combined with action recognition that are used to identify when a staff member is likely to have manipulated a shelf to optimize the updating process. As a result, the processor **104** is configured to provide an intelligent label detection with adaptive boundary that automatically accommodates various shelf configurations to maintain accurate, real-time inventory monitoring with minimal manual intervention.

FIG. 4 is a diagram illustrating an implementation scenario of monitoring inventory items in a storage facility, in accordance with an embodiment of the present disclosure. FIG. 4 is described in conjunction with elements from FIGs. 1A-1B, 2, and 3. With reference to FIG. 4, there is shown a flowchart **400** that depicts an exemplary scenario of monitoring the inventory items in the storage facility that includes operations **402** to **434.**

At operation **402,** the processor **104** is configured to initiate the monitoring of the inventory items in the storage facility **106,** such as by receiving the image data. Furthermore, at operation **404,** the processor **104** is configured to detect the objects detected in the image data by using an object detection model. Thereafter, at operation **406,** an object tracking model is configured to track the movement of the object in order to track the inventory items placed in the storage facility **106.** At operation **408,** the processor **104** is configured to select the type of camera device from the at least one camera device **112.** Moreover, if a static camera device is selected, such as at operation **410,** then, in that case, the processor **104** is configured to receive the highest possible resolution image as the image data for further processing. In another implementation, if a PTZ camera device is selected, such as at operation **412,** then in that case, the processor **104** is configured to translate the directions to pan tilt and zoom values, such as at operation **414** and at operation **416** the processor **104** is configured to perform the PTZ operations. In yet another implementation, if the paired PTZ camera is selected, such as at operation **418,** then, in that case, the processor **104** is configured to translate the directions from static to PTZ, such as at operation **420.** Thereafter, at operation **422,** the processor **104** is configured to translate the same to pan tilt and zoom values and perform PTZ operations (at operation **416)** to get the highest possible resolution image (at operation **410).** Further, at operation **424,** the processor **104** is configured to send the image data to OCR library and detect the OCR type, such as at operation **426** and at operation **428.** Thereafter, the processor **104** is configured to read and attach data with objects, at operation **430** and finally at operation **432,** the objects are detected along with the labels. In an alternative embodiment, the system **100A** is configured to monitor inventory items through automated object detection and continuous tracking without requiring shelf-based organization or demarcation of shelf boundaries. The processor **104** utilizes the object detection model (at operation **404)** and object tracking model (at operation **406)** described herein to automatically detect inventory items within the image data, track changes in the inventory items over time, and determine inventory levels based on the tracked changes. Additionally, the inventory items may be positioned on various surfaces or locations within the storage facility **106,** including but not limited to mobile carts, tables, countertops, floor areas, bins, or other non-shelf storage arrangements. For example, in healthcare or medical supply environments, inventory items such as medical supplies, instruments, or pharmaceuticals may be placed on mobile supply carts that are moved between different locations within the facility. The processor **104** continuously monitors these inventory items through camera-based image analysis, detecting the presence or absence of items and tracking their movement from one location to another. The processor **104** determines inventory levels by analyzing the tracked changes in inventory items over time. When an inventory item is detected as moving from a first location to a second location, or when an item is detected as being removed from the field of view, the processor **104** updates the inventory levels accordingly. The processor **104** generates alerts when determined inventory levels fall below predefined thresholds, enabling automated inventory monitoring without requiring shelf-specific demarcation or manual counting. The PTZ camera devices **116** automatically adjust positioning (through pan, tilt, and zoom operations to capture high-resolution images of detected objects of interest, whether those objects are positioned on shelves, carts, tables, or other surfaces within the storage facility **106.** The PTZ camera comprises a control module configured to receive sensor inputs or detection data identifying an object of interest within a monitored area. Based on the detected location, the control module executes automated tracking algorithms to compute corresponding pan, tilt, and zoom adjustments required to center the object within the camera's field of view. The PTZ camera further implements a closed-loop feedback mechanism that continuously analyzes successive image frames to verify alignment and generate corrective movement commands when the object shifts position. The control module is additionally configured to transition between predefined viewing presets or dynamically calculated viewing paths to track object movement across multiple zones within the storage facility. When integrated with external monitoring systems, the PTZ camera receives real-time positional information to refine its orientation and maintain consistent visual coverage of the object of interest. This embodiment provides real-time inventory monitoring across diverse storage configurations, including both shelf-based and non-shelf-based arrangements, while maintaining accuracy and automation benefits of camera-based monitoring.

In a further implementation, the processor 104 is configured to perform automated tallying of inventory items using camera-based visual counting without requiring shelf demarcations or fixed storage structures. The at least one camera device 112 captures images of an inventory area, and the processor 104 applies object detection algorithms to identify and enumerate discrete inventory items within the field of view, generating inventory tallies by counting detected objects of each type. The processor 104 further detects and reads visual labels, including barcodes and QR codes, and identifies inventory items associated with RFID tags based on tag information available to the system, independent of shelf context. The one or more PTZ camera devices 116 automatically adjust pan, tilt, and zoom parameters as described earlier to focus on detected labels for item identification, regardless of whether items are positioned on carts, tables, or other surfaces. The processor 104 updates inventory tallies in real-time as items enter or exit the monitored area and generates alerts when count of an inventory item falls below a predefined threshold, such as to ensure an accurate and continuous inventory management.

FIG. 5A and 5B are diagrams depicting a detection and demarcation of a plurality of shelf boundaries of a plurality of shelves for monitoring inventory items in a storage facility, in accordance with an embodiment of the present disclosure. FIGs. 5A and 5B are described in conjunction with elements from FIGs. 1A, 1B, and 3 to 4. With reference to FIGs. 5A and 5B, there is shown a diagram **500A** and **500B** that depicts a detection and demarcation of the plurality of shelves **108** along with shelf fill levels for monitoring inventory items in the storage facility **106.**

In an implementation scenario, the processor **104** is configured to detect and demarcate the plurality of shelf boundaries, for example a shelf boundary **502** of the plurality of shelves. Each boundary from the plurality of the shelf boundaries is precisely determined through based on the selection of the detected labels and the corresponding positions. Moreover, the processor **104** is configured to display the shelf fill levels, such as a shelf fill level **504** in order to provide real-time monitoring, such as through battery-like icons displaying different fill levels, where the full battery indicator indicates high fill levels and low battery level or no battery level indicators represent medium fill levels or empty shelves, providing an intuitive and quick assessment of inventory status. As a result, the processor **104** is configured to provide a continuous fill level monitoring through accurate label detection, precise boundary demarcation, and real-time inventory status across multiple shelf sections.

FIG. 6 is a diagram that depicts an exemplary shelf layout illustrating the organization and monitoring of inventory items in a storage facility, in accordance with an embodiment of the present disclosure. FIG. 6 is described in conjunction with elements from FIGs. 1A-5B. With reference to FIG. 6, there is shown an exemplary illustration **600** that depicts a plurality of shelves for storing and organizing the inventory items in the storage facility **106.**

In an implementation, the storage facility **106** includes the plurality of shelves, such as a first shelf **602A,** a second shelf **602B,** a third shelf **602C,** and the like. The processor **104** is configured to detect and demarcate shelf boundaries for each level based on the received image data from the at least one camera device **112** along with the shelf fill levels, for example a first shelf fill **604A,** a second shelf fill level **604B,** a third shelf fill level **604C,** and the like. For example, when a shelf is positioned at the top without adjacent shelves above, the processor **104** is configured to generate the plurality of shelf boundaries based on determined midpoints between detected labels in order to monitor fill levels in real-time, enabling continuous tracking of inventory changes. Hence, such organized shelf arrangement can be monitored through the system **100B** which updates periodically to show real-time fill levels and generate alerts when inventory levels fall below predefined thresholds.

FIG. 7 is a diagram that depicts an exemplary display device illustrating real-time or near real-time monitoring of inventory items in a storage facility, in accordance with an embodiment of the present disclosure. FIG. 7 is described in conjunction with elements from FIGs. 1A, 1B, 2, 3, 4, 5A, 5B, and 6. With reference to FIG. 7, there is shown an exemplary illustration **700** that depicts a display device **118** for displaying a report generated for monitoring the inventory items in the storage facility **106.**

In an implementation, the display device **118** includes any device that is capable of displaying information in a human-readable format, such as a computer monitor, a tablet, or a smartphone. The display device **118** is a visual interface used to display a dynamic report comprising stock keeping units (SKUs), shelf identifiers and corresponding fill levels of the plurality of inventory items that are updated in real-time or near-real time. For example, the display device **118** is configured to display dynamic report with color-coded fill level indicators (green for optimal stock, yellow for medium, red for low), SKU details (item codes, descriptions, locations), shelf identifiers (alphanumeric codes, shelf numbers, zone markers), and real-time updates that refresh automatically, e.g., in 2 seconds, 10 second, 30 seconds or upon detected changes in inventory levels. Therefore, the display device **118** acts as an essential component of the system **100B** (of FIG. 1B), enabling operators or clients to monitor each and every inventory item of the storage facility **106.** Hence, such up-to-date information can be further used for decision-making, and proactive maintenance practices that improve the overall management of the storage facility **106.**

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural. The word "exemplary" is used herein to mean "serving as an example, instance or illustration". Any embodiment described as "exemplary" is not necessarily to be construed as preferred or advantageous over other embodiments and/or to exclude the incorporation of features from other embodiments. The word "optionally" is used herein to mean "is provided in some embodiments and not provided in other embodiments". It is appreciated that certain features of the present disclosure, which are, for clarity, described in the context of separate embodiments, may also be provided in combination in a single embodiment. Conversely, various features of the present disclosure, which are, for brevity, described in the context of a single embodiment, may also be provided separately or in any suitable combination or as suitable in any other described embodiment of the disclosure.

## Claims

1. A method (200) for monitoring inventory items in a storage facility (106), the method (200) comprising:
receiving, by a processor (104), image data from at least one camera device (112) installed in the storage facility (106);
detecting and demarcating, by the processor (104), a plurality of boundaries of a plurality of inventory items (108) based on the image data;
determining, by the processor (104), fill levels in a real-time or near real-time within each demarcated boundary of the plurality of boundaries on the image data; and
controlling, by the processor (104), display of the image data along with the determined fill levels specific for each inventory item in the image data, wherein the display is updated periodically or continuously to indicate a physical change of inventory items in each boundary of the plurality of inventory items based on the determined fill levels in the real-time or near real-time.

2. The method (200) of claim 1, further comprising detecting a plurality of labels at the plurality of inventory items (108) along with a corresponding orientation of each detected label with respect to a corresponding reference axis for the detection and demarcation of the plurality of boundaries.

3. The method (200) of claim 2, further comprising:
selecting a subject label located at a first boundary on the image data for which a boundary is to be demarcated;
selecting a first proximal label on the image data at a first side of the subject label, wherein the first proximal label is located at a second boundary near the first boundary;
selecting a second proximal label on the image data at a second side of the subject label, wherein the second proximal label is located at a third boundary near the first boundary and the second side is opposite the first side;
selecting a third proximal label on the image data at a third side of the subject label, wherein the third proximal label is located at a fourth boundary located above the first boundary, and wherein the subject label, the first proximal label, the second proximal label, and the third proximal label are part of the detected plurality of labels.

4. The method (200) of claim 3, further comprising performing a carving operation on the received image data in order to slice an image in order to select the subject label, the first proximal label, the second proximal label, and the third proximal label for the detection and demarcation of the plurality of boundaries.

5. The method (200) of claim 4, further comprising determining a first midpoint between the first proximal label and the subject label and a second midpoint between the second proximal label and the subject label for the detection and demarcation of the plurality of boundaries.

6. The method (200) of claim 5, further comprising generating a boundary for the subject label based on the determined first midpoint, the second midpoint, and the third proximal label selected from the plurality of boundaries when the first boundary is surrounded by at least three adjacent boundaries in three different directions.

7. The method (200) of claim 5, further comprising generating a boundary for the subject label located at the first boundary based on the determined first midpoint and the second midpoint from the plurality of boundaries when the first boundary is a top boundary surrounded by at least two adjacent boundaries without any presence of boundaries above the first boundary.

8. The method (200) of claim 5, further comprising generating a boundary for the subject label based on either the first midpoint or the second midpoint, and the selected third proximal label from the plurality of boundaries when the first boundary is a corner boundary surrounded by one adjacent boundary and a top boundary above the first boundary; and adjusting a boundary of a first boundary corresponding to the subject label from the plurality of boundaries based on the orientation of the subject label with respect to a predefined angle.

9. The method (200) of claim 1, further comprising segmenting content within each boundary of the plurality of boundaries and determining fill levels by determining empty space and occupied ratio for the determination of the fill levels in the real-time or near real-time within each demarcated boundary of the plurality of boundaries.

10. The method (200) of claim 1, further comprising generating a dynamic-report comprising stock keeping units (SKUs), status, and fill levels of the inventory items that are updated in real-time or near-real time.

11. The method (200) of claim 1, further comprising generating one or more alerts for the inventory items having fill levels below one or more predefined thresholds.

12. The method (200) of claim 1, further comprising capturing a sequence of images by either one or more pan-tilt-zoom (PTZ) camera devices installed in the storage facility (106) operating either alone or in combination with one or more static camera devices (114) installed in the storage facility (106) and communicating the captured image data from the at least one camera device (112) to a processing apparatus.

13. The method (200) of claim 13, further comprising determining pixel coordinates by identifying the label areas of the one or more detected labels and further transforming pixel coordinates into PTZ camera control parameters for controlling the movement of the at least one PTZ camera device to zoom into the identified label areas.

14. The method (200) of claim 1, wherein the plurality of inventory items are positioned on mobile carts, tables, countertops, floor areas, or bins within the storage facility (106), wherein detecting and demarcating the plurality of boundaries comprises detecting boundaries of individual inventory items independent of shelf structures, and wherein determining fill levels comprises tracking presence or absence of inventory items and updating inventory levels based on detected changes in inventory item positions.

15. A system (100A, 100B) configured to monitor inventory items in a storage facility (106), comprising:
a processor (104) communicatively coupled with at least one camera device (112),wherein the processor (104) is configured to:
receive image data from the at least one camera device (112);
detect and demarcate a plurality of boundaries based on the image data;
determine fill levels in a real-time or near real-time within each demarcated boundary of the plurality of boundaries on the image data; and
control display of the image data along with the determined fill levels
specific for each boundary in the image data, wherein the display is updated periodically or continuously to indicate a physical change of inventory items in each boundary based on the determined fill levels in the real-time or near real-time within said each demarcated boundary.
